# EUROPEAN PATENT APPLICATION

(11) **EP 4 687 267 A1**
(43) Date of publication of application: **04.02.2026**
(21) Application number: 25190771.3
(22) Date of filing: 21.07.2025
(51) Int. Cl.: H02K 1/276, H02K 15/03

(54) **ELECTRIC MACHINE WITH PERMANENT MAGNET ROTOR**

(30) Priority: 01.08.2024 IT 202400018064
(71) Applicant: Marelli Europe S.p.A., 20011 Corbetta (MI) (IT)
(72) Inventor: MONTAGLIANI, Luca, 20011 Corbetta (MI) (IT); ARCALENI, Agnese, 20011 Corbetta (MI) (IT)
(74) Representative: Studio Torta S.p.A.

(57) **Abstract**

An electric machine (1) having: a shaft (2); a rotor (4) having: a magnetic core (6), which consists of a series of laminations (12, 13) stacked together and has a plurality of seats (10, 11) oriented axially; a plurality of magnetic poles (7), each having two permanent magnets (8); and a stator (5). The magnetic core (6) consists of first laminations (12) alternated with second laminations (13) different from the first laminations (12), so that at least ten second laminations (13) are interposed between two first laminations (12). Each first lamination (12) has, for each seat (10), two first fixing blades (14), which are parallel to each other, are arranged on the same side of the first seat (10) and are bent by 90° against a same larger side wall of a corresponding permanent magnet (8). Each first lamination (12) has, for each seat (10), a second fixing blade (15), which is oriented perpendicular to the corresponding first fixing blades (14) and is bent by 90° against a smaller side wall of a corresponding first permanent magnet (8). Each second lamination (13) completely lacks fixing blades bent against the corresponding permanent magnet (8).

## Description

### CROSS-REFERENCE TO RELATED APPLICATIONS

This patent application claims priority from Italian patent application no. 102024000018064 filed on August 1, 2024, the entire disclosure of which is incorporated herein by reference.

### TECHNICAL FIELD

The present invention relates to an electric machine with permanent magnet rotor.

### PRIOR ART

Patent application EP4243249A1 describes a synchronous electric machine with a rotor having permanent magnets (i.e. arranged inside the rotor), the electric machine being mainly utilized for the automotive industry. In this electric machine, the rotor comprises a magnetic core consisting of a series of laminations stacked together and a plurality of permanent magnets which are embedded inside the magnetic core; in particular, the magnetic core comprises a series of seats arranged axially, inside which the permanent magnets are inserted. In order to guarantee that the permanent magnets remain still inside the seats even when subject to stresses deriving from the rotation of the rotor at high speed (which can even arrive at 30,000 rpm), the permanent magnets are connected to the inner walls of the seats by means of the interposition of glue. However, the glueing of the permanent magnets inside the seats involves an increase in production cost, involves a (slight) increase in weight and can also involve an increase in the unbalance of the rotor (as the glue subject to the thrust of the permanent magnets when inserted axially can often distribute itself in an irregular manner within the seats). Namely, the fastening of the permanent magnets through the application of glue can lead to the development of unbalance inside the rotor, as it is very difficult to obtain a homogeneous distribution of the glue inside the seats.

Other examples of a synchronous electric machine with permanent magnet rotor are described in patent applications US2008007131A1 and WO2006003244A2.

Patent application FR3129792A1 describes a rotor for a rotating electric machine and comprising: permanent magnets having, in cross-section perpendicular to a rotation axis of the rotor, a long side and a short side; and a magnetic core, which consists of a series of laminations stacked together and is provided with a plurality of seats oriented axially, which contain the permanent magnets. In each seat, at least one lamination comprises at least one tab, which extends within the seat for arriving into contact with the respective permanent magnet and push the permanent magnet against an opposite face of the seat.

Patent CN115378204B describes a method for making laminated magnetic core for a rotor of a rotating electric machine.

### DESCRIPTION OF THE INVENTION

The object of the present invention is to provide an electric machine with permanent magnet rotor which is devoid of the drawbacks described above and is, at the same time, easy and cost-effective to manufacture.

According to the present invention, an electric machine with permanent magnet rotor is provided, according to what claimed by the appended claims.

The claims describe preferred embodiments of the present invention forming integral part of the present description.

### BRIEF DESCRIPTION OF THE DRAWINGS

The present invention will now be described with reference to the accompanying drawings, which illustrate some non-limiting example embodiments thereof, wherein:
- Figure 1 is a schematic longitudinal section view, with parts removed for clarity, of an electric machine with permanent magnet rotor manufactured in accordance with the present invention;
- Figure 2 is a partially exploded perspective view, with parts removed for clarity, of a rotor magnetic core of the electric machine of Figure 1;
- Figure 3 is a plan view of a first type of laminations composing a rotor magnetic core of the electric machine of Figure 1;
- Figures 4 and 5 are two views on an enlarged scale of a seat of the lamination of Figure 3 without and with a corresponding permanent magnet, respectively;
- Figures 6 and 7 are two views on an enlarged scale of a further seat of the lamination of Figure 3 without and with a corresponding permanent magnet, respectively;
- Figure 8 is a plan view of a second type of laminations composing a rotor magnetic core of the electric machine of Figure 1;
- Figures 9 and 10 are two views on an enlarged scale of a seat of the lamination of Figure 8 without and with a corresponding permanent magnet, respectively;
- Figures 11 and 12 are two views on an enlarged scale of a further seat of the lamination of Figure 8 without and with a corresponding permanent magnet, respectively; and
- Figures 13-16 are schematic views of respective details of the rotor magnetic core of the electric machine of Figure 1 and in particular Figure 13 is a section view along line XIII-XIII, whereas Figure 14 is a section view along line XIV-XIV.

### PREFERRED EMBODIMENTS OF THE INVENTION

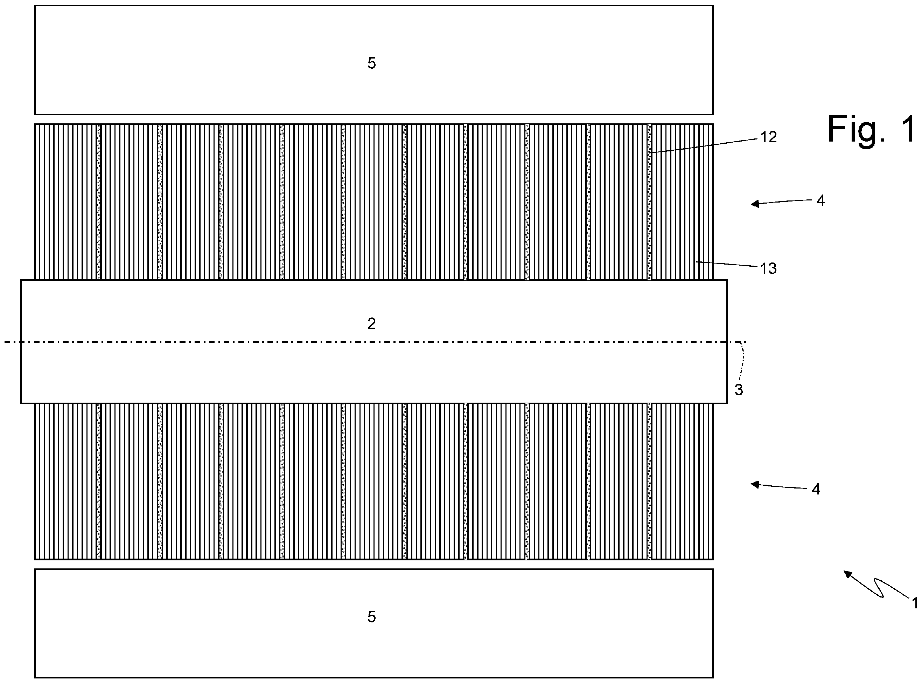

In Figure 1, reference numeral 1 indicates, as a whole, a synchronous electric machine for the automotive industry of the reversible type (i.e. that can operate both as electric motor absorbing electric energy and generating a mechanical torque, and as electric generator absorbing mechanical energy and generating electric energy). The electric machine 1 comprises a shaft 2, which is mounted so as to rotate around a central rotation axis 3, a permanent magnet rotor 4 having a cylindrical shape and keyed to the shaft 2 so as to rotate together with the shaft 2, and a stator 5 having a cylindrical tubular shape arranged around the rotor 4 so as to surround the rotor 4.

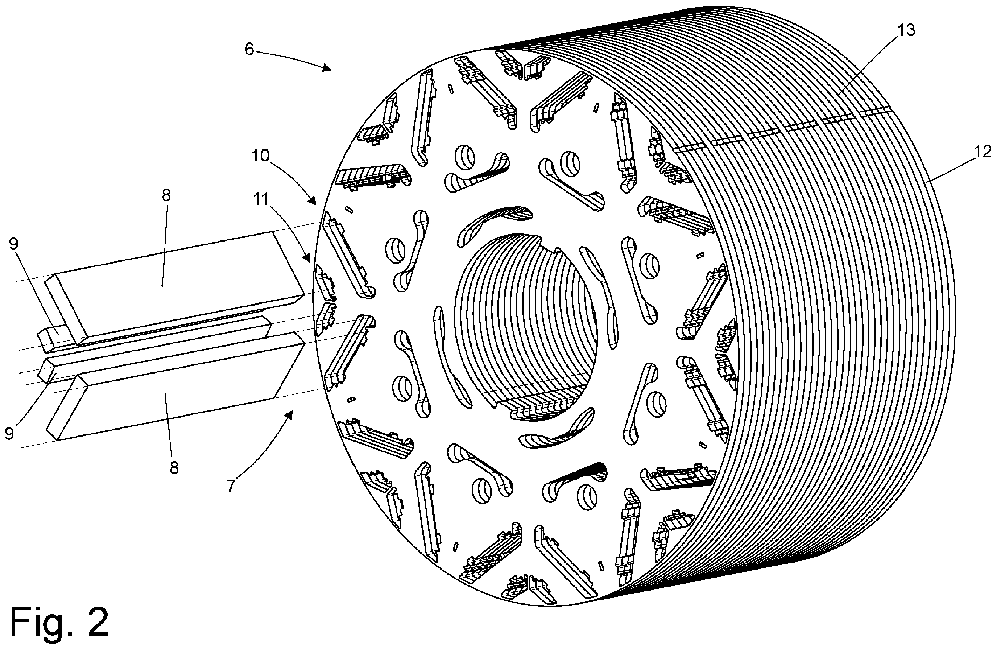

According to what is illustrated in Figure 2, the rotor 4 comprises a magnetic core 6 and a plurality of magnetic poles 7 consisting of permanent magnets 8 and 9, which are embedded inside the magnetic core 6.

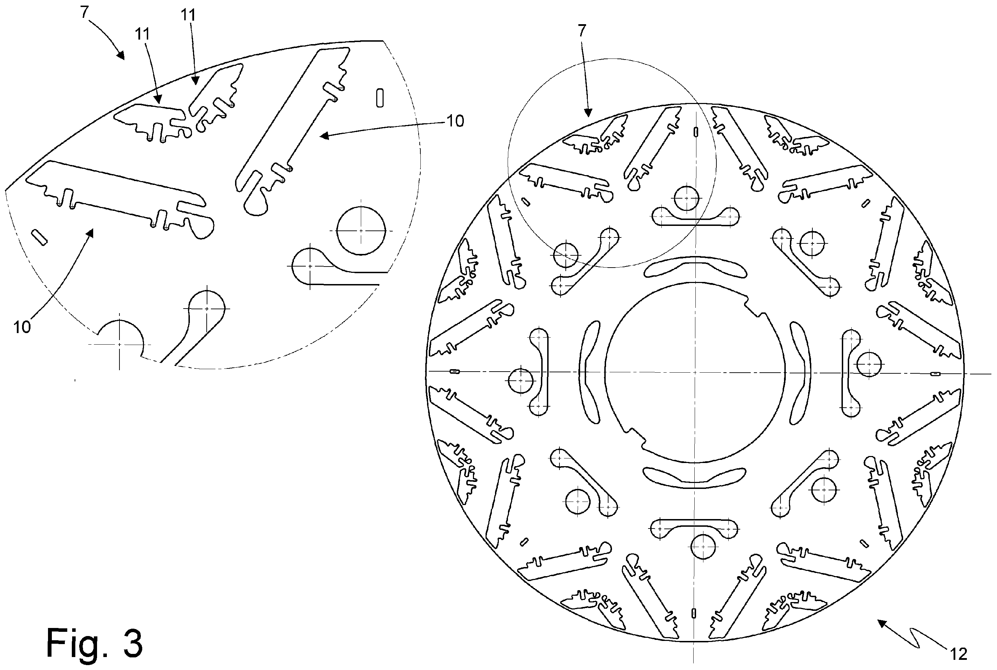

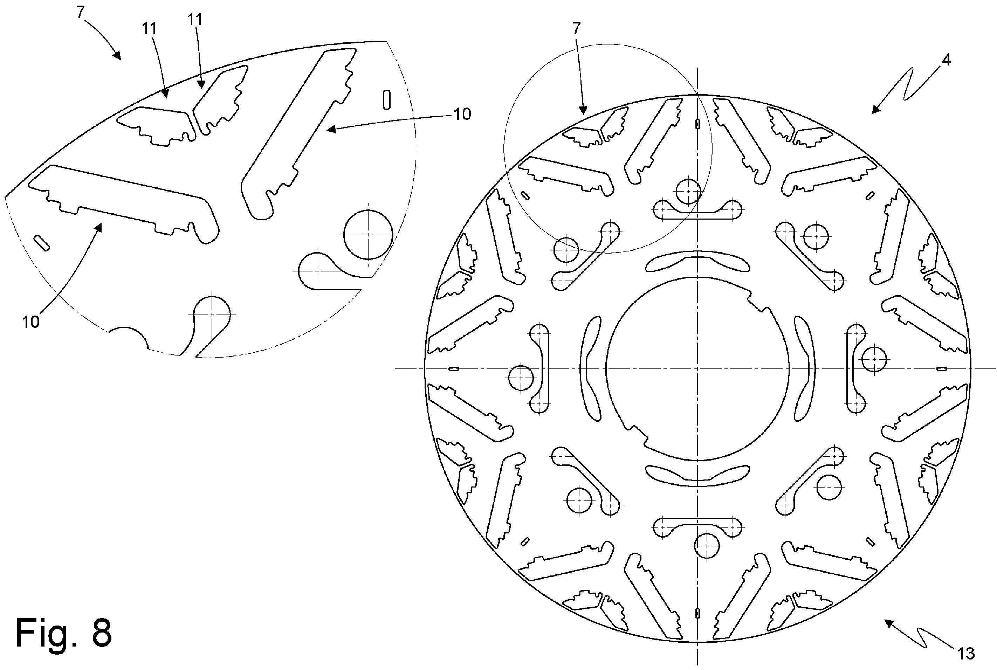

According to what is illustrated also in Figure 2, each magnetic pole 7 comprises two permanent magnets 8, which are arranged next to each other at a certain distance from each other in respective seats 10 (better visible in Figures 3 and 8) obtained axially inside the magnetic core 6. According to a preferred embodiment, in each magnetic pole 7, the two permanent magnets 8 are arranged inclined with respect to each other so that the two permanent magnets 8 form a "V" shape (with an obtuse angle at the vertex); namely in each magnetic pole 7, the two permanent magnets 8 are arranged next to each other and inclined to form an obtuse angle in a respective pair of seats 10 spaced apart from each other so that, between the two seats 10, the magnetic core 6 has a bridge which is oriented radially and is astride the two permanent magnets 8. Furthermore, each magnetic pole 7 comprises two permanent magnets 9, which are arranged next to each other at a certain distance from each other in respective seats 11 (better visible in Figures 3 and 8) obtained axially inside the magnetic core 6. According to a preferred embodiment, in each magnetic pole 7, the two permanent magnets 9 are arranged inclined with respect to each other so that the two permanent magnets 9 form a "V" shape (with an obtuse angle at the vertex); namely in each magnetic pole 7, the two permanent magnets 9 are arranged next to each other and inclined to form an obtuse angle in a respective pair of seats 11 spaced apart from each other so that, between the two seats 11, the magnetic core 6 has a bridge which is oriented radially and is astride the two permanent magnets 9. In particular, in each magnetic pole 7, the two permanent magnets 9 are smaller than the two permanent magnets 8, are arranged radially more on the outside of the two permanent magnets 8 and are arranged in an area delimited by the two permanent magnets 8.

It is important to remember that an obtuse angle is a convex angle, the width of which is greater than 90° (corresponding to the right angle) and less than 180° (corresponding to the flat angle); in other words, an obtuse angle is larger than a right angle (namely is greater than 90°) and smaller than a flat angle (namely is less than 180°) .

According to a preferred embodiment illustrated in the accompanying figures, in each magnetic pole 7, the obtuse angle formed between the two permanent magnets 8 is smaller than the obtuse angle formed between the two permanent magnets 9. In particular, in each magnetic pole 7, the obtuse angle formed between the two permanent magnets 8 is equal to 110° and the obtuse angle formed between the two permanent magnets 9 is equal to 120°.

According to a preferred embodiment illustrated in the accompanying figures, in each magnetic pole 7, a first distance existing between the proximal ends (namely of the two ends closest to each other) of the two permanent magnets 8 is greater than a second distance existing between the proximal ends (namely of the ends closest to each other) of the two permanent magnets 9. Similarly, in each magnetic pole 7, a third distance existing between the proximal ends (namely of the two ends closest to each other) of the two seats 10 is greater than a fourth distance existing between the proximal ends (namely of the two ends closest to each other) of the two seats 11.

Each permanent magnet 8 or 9 has a parallelepiped shape externally delimited by two larger side walls, which are parallel to and opposite each other, and by two smaller side walls, which are parallel to and opposite each other and are perpendicular to the larger side walls; obviously, the two larger side walls have a greater extension (area) than the two smaller side walls.

The magnetic core 6 consists of a series of laminations 12 and 13 (different from one another, as it will be explained in the following) stacked together and has a plurality of axial seats 10 and 11 spaced apart from one another in which the permanent magnets 8 and 9 are inserted (as described in the foregoing). In particular, the laminations 12 are alternated with the laminations 13 (which are different from the laminations 12, as it will be explained in the following), so that at least ten laminations 13 are interposed between two laminations 12; in particular, at least fifteen and preferably at least twenty laminations 13 are interposed between two laminations 12 (according to a preferred embodiment, between twenty and thirty laminations 13 are interposed between two laminations 12).

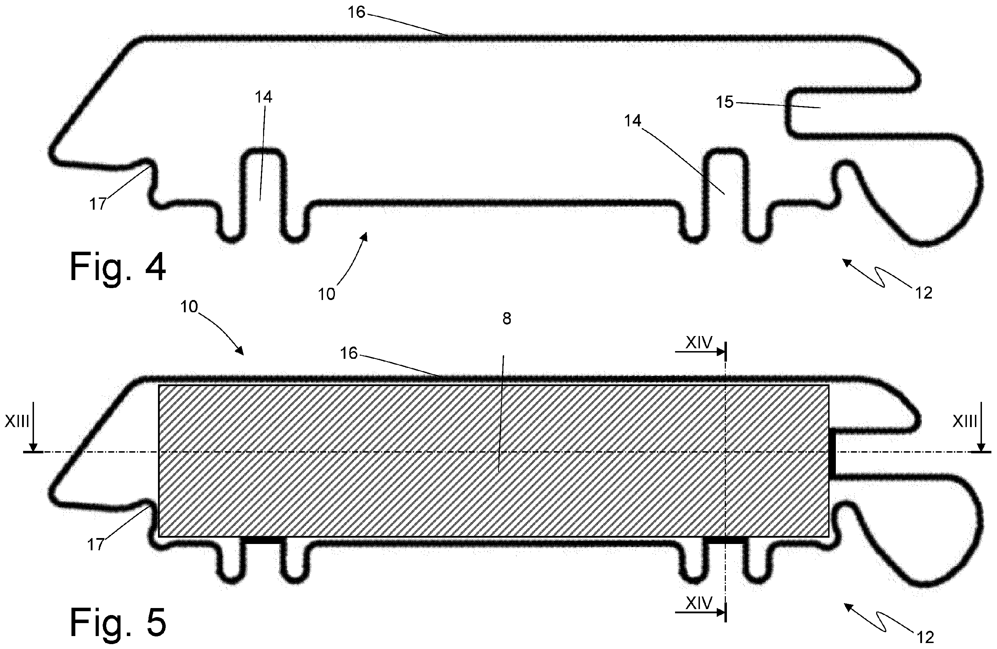

According to what is illustrated in Figures 4 and 5, each lamination 12 has, for each seat 10, two and only two fixing blades 14, which are parallel to each other, are arranged on the same side of the seat 10 and are bent by 90° against a same larger side wall of a corresponding permanent magnet 8 housed in the seat 10 (according to a different embodiment not illustrated, each lamination 12 has, for each seat 10, at least two fixing blades 14, namely more than two fixing blades 14 for each seat 10 can be provided). Furthermore, each lamination 12 has, for each seat 10, one single fixing blade 15, which is oriented perpendicular to the corresponding fixing blades 14 and is bent by 90° against a smaller side wall of a corresponding permanent magnet 8 housed in the seat 10 (according to a different embodiment not illustrated, each lamination 12 has, for each seat 10, two or more fixing blades 15).

According to a different embodiment not illustrated, the number of fixing blades 14 in each seat 10 is different and varies from a minimum of two to a maximum of four or five; similarly, according to a different embodiment not illustrated, the number of fixing blades 15 in each seat 10 is different and varies from a minimum of one to a maximum of two or three. In general, the number of fixing blades 14 and 15 is established as a function of the dimensions (length and width) of the fixing blades 14 and 15, as a function of the dimensions (length and width) of each permanent magnet 8, and as a function of the desired holding force that the fixing blades 14 and 15 have to exert on each permanent magnet 8.

According to a preferred embodiment, each seat 10 has a flat wall 16, which is opposite the two fixing blades 14 and against which the two fixing blades 14 push the corresponding permanent magnet 8 housed in the seat 10; namely the corresponding permanent magnet 8 is stacked between the two fixing blades 14 and the flat wall 16 of the seat 10, being pushed by the two fixing blades 14 against the flat wall 16 of the seat 10.

According to a preferred embodiment, each seat 10 has a tooth 17, which projects into the seat 10, is oriented perpendicular to the wall 16 and against which the fixing blade 15 pushes the corresponding permanent magnet 8 housed in the seat 10; namely the corresponding permanent magnet 8 is stacked between the fixing blade 15 and the tooth 17 of the seat 10, being pushed by the fixing blade 15 against the tooth 17 of the seat 10.

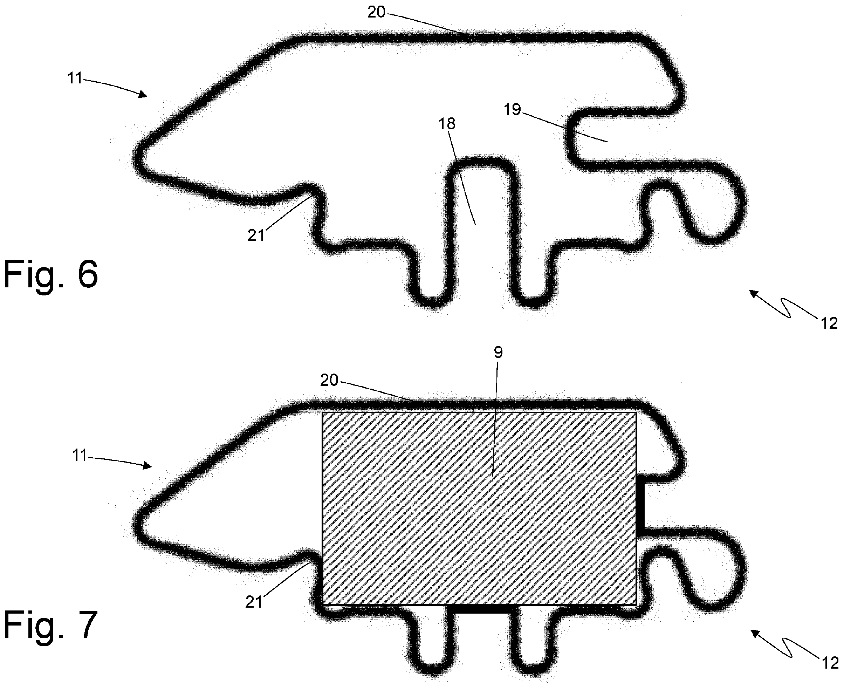

According to what is illustrated in Figures 6 and 7, each lamination 12 has, for each seat 11, one single fixing blade 18, which is bent by 90° against a larger side wall of a corresponding permanent magnet 9 housed in the second seat 11; furthermore, each lamination 12 has, for each seat 11, one single fixing blade 19, which is oriented perpendicular to the corresponding fixing blade 18 and is bent by 90° against a smaller side wall of a corresponding permanent magnet 9 housed in the seat 11. According to a different embodiment not illustrated, the number of fixing blades 18 in each seat 11 is different and varies from a minimum of one to a maximum of two or three; similarly, according to a different embodiment not illustrated, the number of fixing blades 19 in each seat 11 is different and varies from a minimum of one to a maximum of two or three. In general, the number of fixing blades 18 and 19 is established as a function of the dimensions (length and width) of the fixing blades 18 and 19, as a function of the dimensions (length and width) of each permanent magnet 9, and as a function of the desired holding force that the fixing blades 18 and 19 have to exert on each permanent magnet 9.

According to a preferred embodiment, each seat 11 has a flat wall 20, which is opposite the fixing blade 19 and against which the fixing blade 19 pushes the corresponding permanent magnet 9 housed in the seat 11; namely the corresponding permanent magnet 9 is stacked between the fixing blade 19 and the flat wall 20 of the seat 11, being pushed by the fixing blade 19 against the flat wall 20 of the seat 11.

According to a preferred embodiment, each seat 11 has a tooth 21, which projects into the seat 11, is oriented perpendicular to the wall 20 and against which the fixing blade 19 pushes the corresponding permanent magnet 9 housed in the seat 11; namely the corresponding permanent magnet 9 is stacked between the fixing blade 19 and the tooth 21 of the seat 11, being pushed by the fixing blade 19 against the tooth 21 of the seat 11.

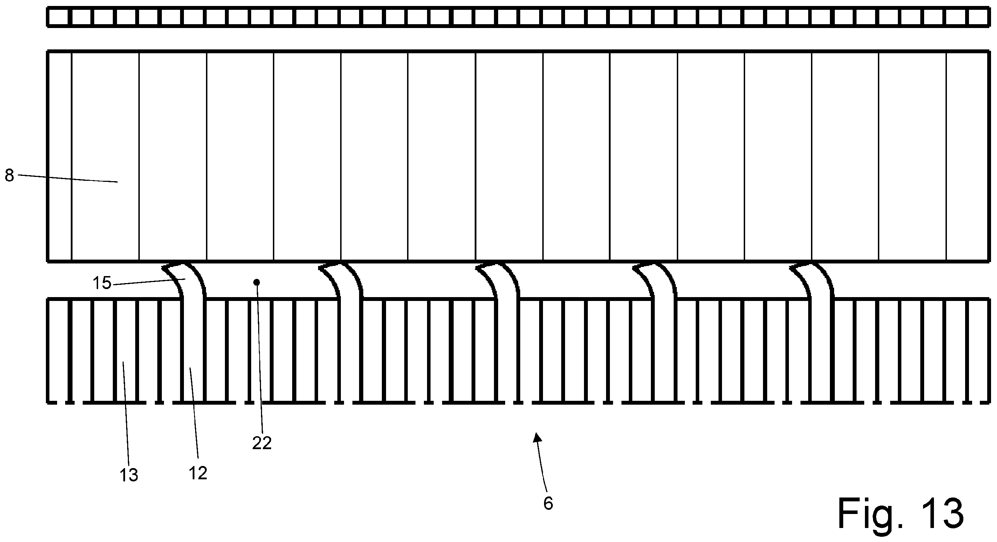

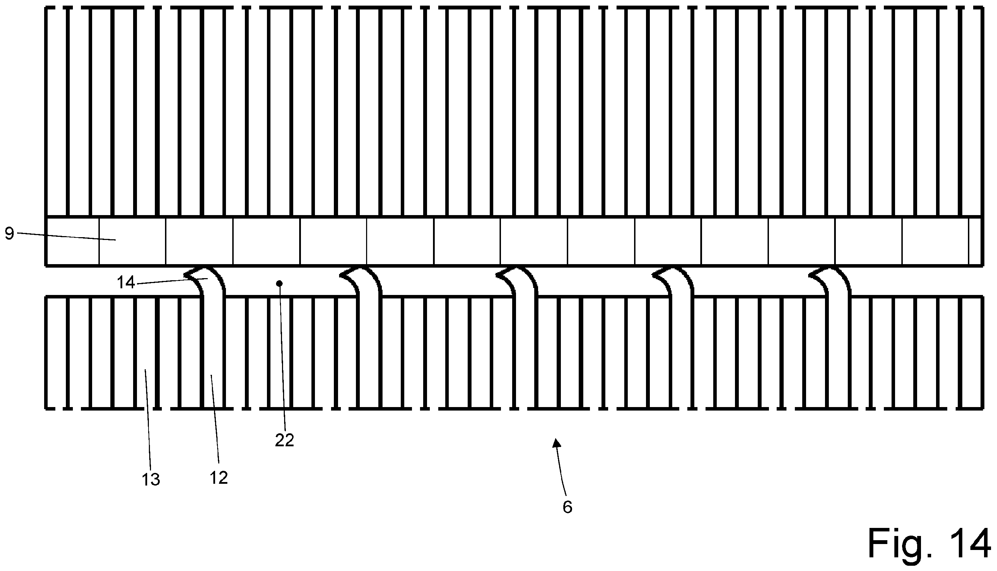

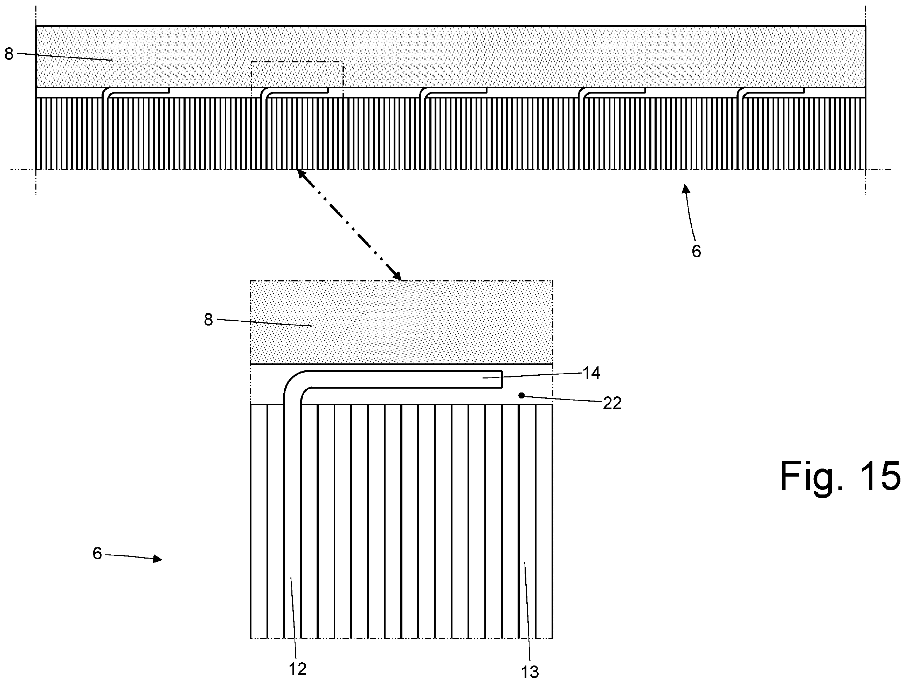

According to what is illustrated in Figures 8-11, unlike the laminations 12, which have the fixing blades 14 and 15, the laminations 13 completely lack fixing blades bent against the permanent magnets 8 and 9. Namely, the fixing blades 14-15 and 18-19 are not present in every lamination 12 or 13 but are present only in the laminations 12 so that, between a fixing blade 14-15 or 18-19 and the following fixing blade 14-15 or 18-19, there is a certain axial distance (equal to the thickness of the laminations 13 interposed between two following laminations 12), as is illustrated in Figures 13-16.

In general, the number of laminations 13 interposed between two laminations 12 is established as a function of the dimensions (length and width) of the fixing blades 14-15 and 18-19, as a function of the dimensions (length and width) of the permanent magnets 8 and 9, as a function of the number of permanent magnets 8 and 9 present inside the magnetic core 6, and as a function of the desired holding force that the fixing blades 14-15 and 18-19 have to exert on the permanent magnets 8 and 9.

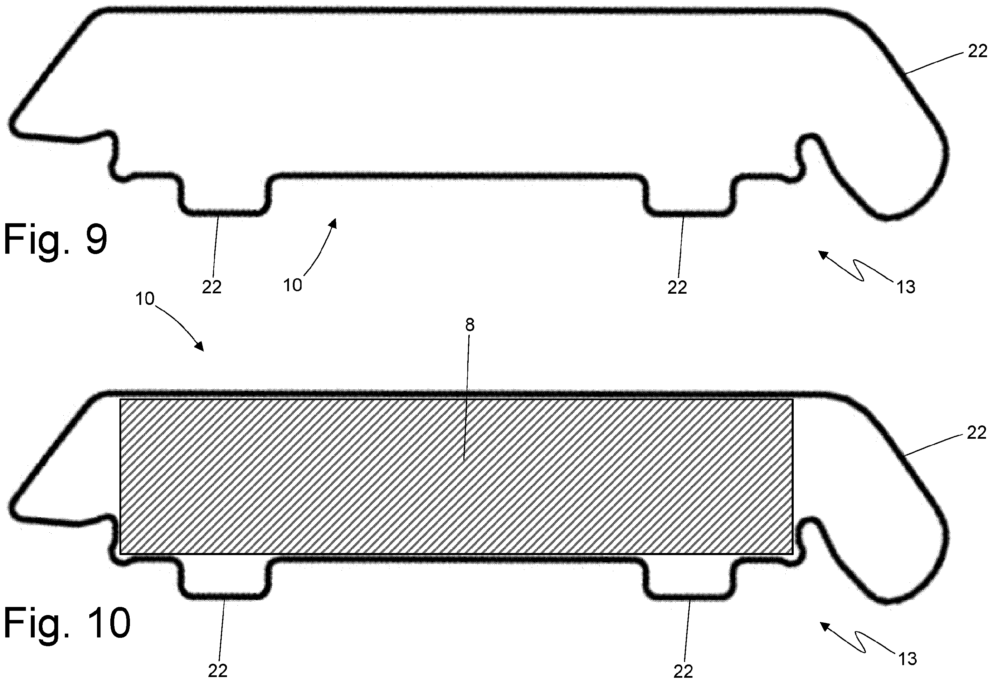

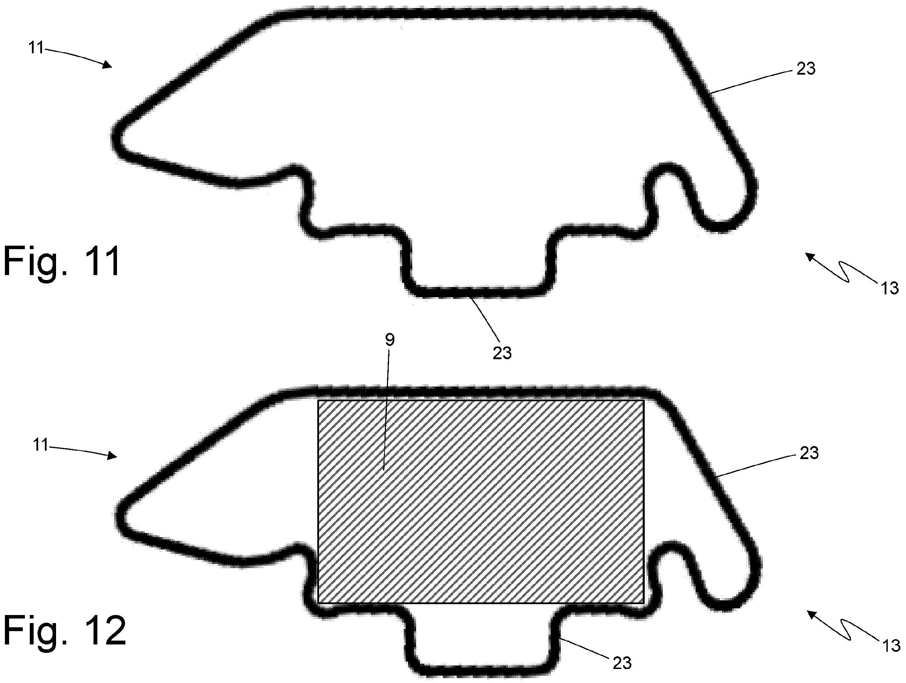

According to a preferred embodiment illustrated in Figures 13-15, in all of the laminations 13, each seat 10 has three recesses 22 (illustrated in Figures 9 and 10), which are arranged in the area of the three fixing blades 14 and 15 of the lamination 12 and create respective empty spaces for the bent portions of the fixing blades 14 and 15 and similarly each seat 11 has two recesses 23 (illustrated in Figures 11 and 12), which are arranged in the area of the two fixing blades 18 and 19 of the lamination 12 and create respective empty spaces for the bent portions of the fixing blades 18 and 19. In other words, the laminations 13 are all identical to one another and thus, in all of the laminations 13, each seat 10 has the recesses 22 and each seat 11 has the recesses 23.

The space left by the recesses 22 for the fixing blades 14 and 15 is schematically illustrated in Figures 13-16, whereas the space left by the recesses 23 for the fixing blades 18 is completely similar and does not thus require a further illustration (additional with respect to what already illustrated in Figures 11 and 12).

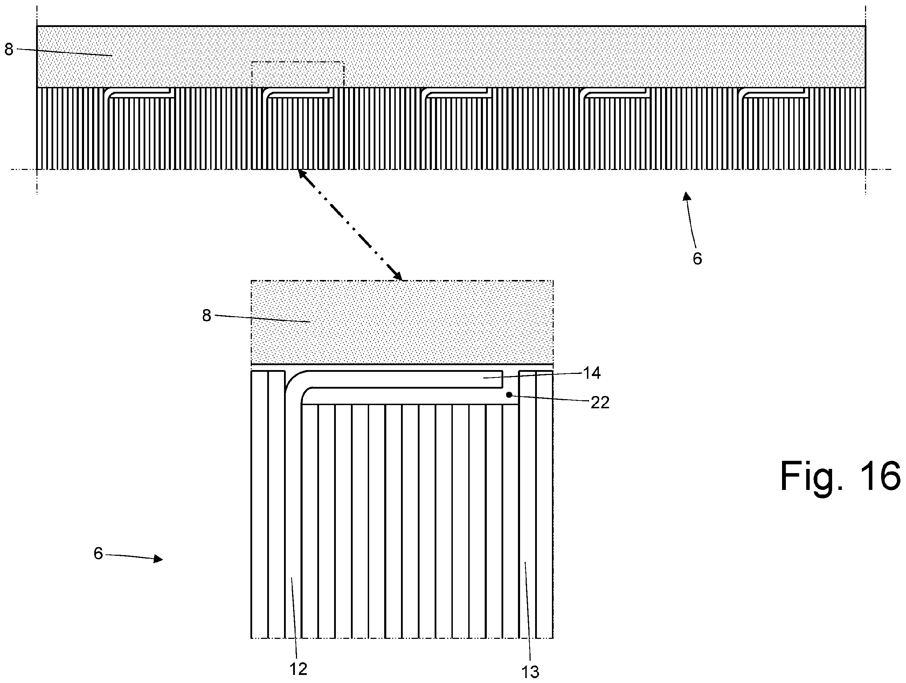

According to an alternative embodiment illustrated in Figure 16, only in one group of laminations 13 arranged in contact with a respective lamination 12, each seat 10 has the three recesses 22, which are arranged in the area of the three fixing blades 14 and 15 of the lamination 12 and create respective empty spaces for the bent portions of the fixing blades 14 and 15 and each seat 11 has the two recesses 23 which are arranged in the area of the two fixing blades 18 and 19 of the lamination 12 and create respective empty spaces for the bent portions of the fixing blades 18 and 19; the remaining laminations 13 instead lack the recesses 22 and 23. Namely, in this embodiment, there are two types of laminations 13: a first type of laminations 13, in which each seat 10 has the recesses 22 and each seat 11 has the recesses 23 and a second type of laminations 13, in which the seats 10 lack the recesses 22 and the seats 11 lack the recesses 23. Groups of laminations 13 of the first type (with the recesses 22 and 23) are arranged in the area of the zones engaged by the fixing blades 14-15 and 18-19 bent against the permanent magnets 8 and 9 (namely of the zones in which the fixing blades 14-15 and 18-19 bent against the permanent magnets 8 and 9 are arranged), whereas other groups of laminations 13 of the second type (without the recesses 22 and 23) are arranged in the area of the zones not engaged by the fixing blades 14-15 and 18-19 bent against the permanent magnets 8 and 9 (namely of the zones in which the fixing blades 14-15 and 18-19 bent against the permanent magnets 8 and 9 are not present). Therefore, the groups of laminations 13 of the first type alternate with the groups of laminations 13 of the second type (as is illustrated in Figure 16).

The embodiments described herein can be combined with one another without departing from the scope of protection of the present invention.

The electric machine 1 described above has numerous advantages.

Firstly, in the electric machine 1 described above, the permanent magnets 8 and 9 are firmly fixed in the respective seats 10 and 11 without utilizing glue; consequently, the production cost of the electric machine 1 described above is reduced and the rotor 4 is more balanced.

Furthermore, the electric machine 1 described above is simple and cost-effective to manufacture, as the fixing blades 14-15 and 18-19 are trivially obtainable during the shearing of the laminations 12 without a relevant increase in production cost and similarly also the recesses 22 and 23 are trivially obtainable during the shearing of the laminations 13 without a relevant increase in production cost.

### LIST OF THE REFERENCE NUMERALS OF THE FIGURES

- 1: electric machine
- 2: shaft
- 3: rotation axis
- 4: rotor
- 5: stator
- 6: magnetic core
- 7: magnetic poles
- 8: permanent magnet
- 9: permanent magnet
- 10: seat
- 11: seat
- 12: laminations
- 13: laminations
- 14: fixing blade
- 15: fixing blade
- 16: wall
- 17: tooth
- 18: fixing blade
- 19: fixing blade
- 20: wall
- 21: tooth
- 22: recesses
- 23: recesses

## Claims

1. An electric machine (1) comprising:
a shaft (2), which is mounted so as to rotate around a central rotation axis (3);
a rotor (4) carried by the shaft (2) and having: a magnetic core (6), which consists of a series of laminations (12, 13) stacked together and has a plurality of seats (10, 11) oriented axially; and a plurality of magnetic poles (7), each comprising two first permanent magnets (8), which are arranged next to each other and inclined to form a first obtuse angle in a respective pair of first seats (10) spaced apart from each other, and two second permanent magnets (9), which are arranged next to each other and inclined to form a second obtuse angle in a respective pair of second seats (11) spaced apart from each other; and
a stator (5) arranged around the rotor (4) so as to surround the rotor (4);
wherein each first or second permanent magnet (8, 9) has a parallelepiped shape externally delimited by two larger side walls, which are parallel to and opposite each other, and by two smaller side walls, which are parallel to and opposite each other and are perpendicular to the larger side walls;
wherein, in each magnetic pole (7), the two second permanent magnets (9) are smaller than the two first permanent magnets (8), are arranged radially more on the outside than the two first permanent magnets (8) and are arranged in an area delimited by the two first permanent magnets (8);
wherein the magnetic core (6) consists of first laminations (12) alternated with second laminations (13) different from the first laminations (12), so that at least ten second laminations (13) are interposed between two first laminations (12);
the electric machine (1) is **characterized in that:**
each first lamination (12) has, for each first seat (10), at least two first fixing blades (14), which are parallel to each other, are arranged on the same side of the first seat (10) and are bent by 90° against a same larger side wall of a corresponding first permanent magnet (8) housed in the first seat (10);
each first lamination (12) has, for each first seat (10), at least one second fixing blade (15), which is oriented perpendicular to the corresponding first fixing blades (14) and is bent by 90° against a smaller side wall of a corresponding first permanent magnet (8) housed in the first seat (10);
each first lamination (12) has, for each second seat (11), at least one third fixing blade (18), which is bent by 90° against a larger side wall of a corresponding second permanent magnet (9) housed in the second seat (11); and
each first lamination (12) has, for each second seat (11), at least one fourth fixing blade (19), which is oriented perpendicular to the corresponding third fixing blade (18) and is bent by 90° against a smaller side wall of a corresponding second permanent magnet (9) housed in the second seat (11); and
each second lamination (13) completely lacks fixing blades bent against the first and second permanent magnets (8, 9).

2. The electric machine (1) according to claim 1, wherein each first seat (10) has a flat wall (16), which is opposite the two first fixing blades (14) and against which the two first fixing blades (14) push the corresponding first permanent magnet (8) housed in the first seat (10).

3. The electric machine (1) according to claim 1 or 2, wherein each first seat (10) has a first tooth (17), which projects into the first seat and against which the second fixing blade (15) pushes the corresponding first permanent magnet (8) housed in the first seat (10).

4. The electric machine (1) according to claim 1, 2 or 3, wherein, in each second lamination (13), each first seat (10) has first recesses (22), which are arranged in the area of the fixing blades (14, 15) of the first lamination (12) and create respective empty spaces for the bent portions of the fixing blades (14, 15).

5. The electric machine (1) according to claim 1, 2 or 3, wherein:
a first type of second laminations (13) is provided, wherein each first seat (10) has first recesses (22), which are arranged in the area of the first and second fixing blades (14, 15) of the first lamination (12) and create respective empty spaces for the bent portions of the first and second fixing blades (14, 15);
a second type of second laminations (13) is provided, wherein each first seat (10) lacks the first recesses (22); and
groups of laminations (13) of the first type are arranged in the area of the zones in which the first and second fixing blades (14, 15) of the first laminations (12) bent against the first permanent magnets (8) are arranged and other groups of laminations (13) of the second type are arranged in the area of the zones in which the first and second fixing blades (14, 15) of the first laminations (12) bent against the first permanent magnets (8) are not present.

6. The electric machine (1) according to one of the claims from 1 to 5, wherein each second seat (11) has a flat wall (20), which is opposite the third fixing blade (18) and against which the third fixing blade (18) pushes the corresponding second permanent magnet (9) housed in the second seat (11).

7. The electric machine (1) according to one of the claims from 1 to 6, wherein each second seat (11) has a second tooth (21), which projects into the second seat (11) and against which the fourth fixing blade (19) pushes the corresponding second permanent magnet (9) housed in the second seat (11).

8. The electric machine (1) according to one of the claims from 1 to 7, wherein, in each second lamination (13), each second seat (11) has second recesses (23), which are arranged in the area of the fixing blades (18, 19) of the first lamination (12) and create respective empty spaces for the bent portions of the fixing blades (18, 19).

9. The electric machine (1) according to one of the claims from 1 to 7, wherein:
a first type of second laminations (13) is provided, wherein each second seat (11) has second recesses (23), which are arranged in the area of the third and fourth fixing blades (18, 19) of the first lamination (12) and create respective empty spaces for the bent portions of the third and fourth fixing blades (18, 19);
a second type of second laminations (13) is provided, wherein each second seat (11) lacks the second recesses (23); and
groups of laminations (13) of the first type are arranged in the area of the zones in which the third and fourth fixing blades (18, 19) of the first laminations (12) bent against the second permanent magnets (9) are arranged and other groups of laminations (13) of the second type are arranged in the area of the zones in which the third and fourth fixing blades (18, 19) of the first laminations (12) bent against the second permanent magnets (8) are not present.

10. The electric machine (1) according to one of the claims from 1 to 9, wherein:
each first lamination (12) has, for each first seat (10), two and only two first fixing blades (14) and one single second fixing blade (15); and
each first lamination (12) has, for each second seat (11), one single third fixing blade (18) and one single fourth fixing blade (19).

11. The electric machine (1) according to one of the claims from 1 to 10, wherein between two first laminations (12) there are interposed at least fifteen and preferably at least twenty second laminations (13).

12. The electric machine (1) according to one of the claims from 1 to 11, wherein each magnetic pole (7) comprises exactly two and only two first permanent magnets (8), which are arranged next to each other and inclined to form an obtuse angle and exactly two and only two second permanent magnets (9) arranged next to each other and inclined to form an obtuse angle.

13. The electric machine (1) according to one of the claims from 1 to 12, wherein, in each magnetic pole (7), the first obtuse angle formed between the two first permanent magnets (8) is smaller than the second obtuse angle formed between the two second permanent magnets (9).

14. The electric machine (1) according to one of the claims from 1 to 13, wherein, in each magnetic pole (7), the first obtuse angle formed between the two first permanent magnets (8) is equal to 110° and the second obtuse angle formed between the two second permanent magnets (9) is equal to 120°.

15. The electric machine (1) according to one of the claims from 1 to 14, wherein:
in each magnetic pole (7), a first distance existing between the proximal ends of the two first permanent magnets (8) is greater than a second distance existing between the proximal ends of the two second permanent magnets (9); and
in each magnetic pole (7), a third distance existing between the proximal ends of the two first seats (10) is greater than a fourth distance existing between the proximal ends of the two second seats (11).
